# EUROPÄISCHE PATENTSCHRIFT

(11) **EP 1 456 047 B1**
(45) Veröffentlichungstag und Bekanntmachung des Hinweises auf die Patenterteilung: **01.08.2007**
(21) Anmeldenummer: 02792625.2
(22) Anmeldetag: 29.11.2002
(51) Int. Cl.: B60K 6/04

(54) **VERFAHREN ZUM STARTEN EINER VERBRENNUNGSKRAFTMASCHINE EINES HYBRIDANTRIEBES EINES KRAFTFAHRZEUGES**
METHOD FOR STARTING AN INTERNAL COMBUSTION ENGINE OF A HYBRID DRIVE OF A MOTOR VEHICLE
PROCEDE DE DEMARRAGE DU MOTEUR A COMBUSTION INTERNE D'UN SYSTEME HYBRIDE DE PROPULSION D'AUTOMOBILE

(30) Priorität: 08.12.2001 DE 10160481
(43) Veröffentlichungstag der Anmeldung: 15.09.2004
(73) Patentinhaber: ROBERT BOSCH GMBH, 70442 Stuttgart (DE)
(72) Erfinder: TUMBACK, Stefan, 70469 Stuttgart (DE); HOETZER, Dieter, 71701 Schwieberdingen (DE)
(86) Internationale Anmeldenummer: PCT/DE2002/004390
(87) Internationale Veröffentlichungsnummer: WO 2003/049965

(56) Entgegenhaltungen:
- EP-A- 0 930 193
- EP-A- 1 020 640
- US-A- 5 698 905

## Beschreibung

Die Erfindung betrifft ein Verfahren zum Starten einer Verbrennungskraftmaschine eines Hybridantriebes eines Kraftfahrzeuges gemäß dem Oberbegriff des Anspruchs 1.

### Stand der Technik

Es sind Hybridantriebe von Kraftfahrzeugen bekannt, bei denen die Verbrennungskraftmaschine und wenigstens eine elektrische Maschine über eine Getriebeanordnung mit einer Antriebswelle des Hybridantriebes wirkverbindbar sind. Derartige Hybridantriebe umfassen mehrere Antriebsquellen, die durch verschiedenartige Energiequellen betreibbar sind. Bekannt ist beispielsweise, eine Verbrennungskraftmaschine mit wenigstens einer elektrischen Maschine zu kombinieren.
Hierbei sind die Kurbelwelle der Verbrennungskraftmaschine und die Antriebswelle der wenigstens einen elektrischen Maschine als Eingangswellen mit einer Getriebeanordnung (Schaltgetriebe) verbunden. Durch Betätigen der Getriebeanordnung sind die Verbrennungskraftmaschine und/oder die elektrische Maschine mit einer Abtriebswelle des Hybridantriebes wirkverbindbar. Die Abtriebswelle dient in bekannter Weise dem Antreiben eines Kraftfahrzeuges. Bekannt sind insbesondere auch Hybridanordnungen, die mehr als eine elektrische Maschine umfassen.

Hier sind insbesondere Kraftfahrzeuge mit leistungsverzweigendem Hybridantrieb bekannt, die neben einer Verbrennungskraftmaschine wenigstens zwei elektrische Maschinen umfassen, die sowohl motorisch als auch generatorisch betrieben werden können. Bei Kraftfahrzeugen mit derartigen Hybridantrieben wird auf eine eigene Startanlage für die Verbrennungskraftmaschine verzichtet. Das Starten der Verbrennungskraftmaschine kann durch die wenigstens eine elektrische Maschine des Hybridantriebes erfolgen, indem diese mit einer Energiequelle, in der Regel der Kraftfahrzeugbatterie, verbunden wird. Durch den motorischen Betrieb der wenigstens einen elektrischen Maschine erfolgt bei entsprechender Schaltung der Getriebeanordnung ein Andrehen der Verbrennungskraftmaschine.

Bei diesen Hybridantrieben ist nachteilig, dass bei ausgefallener Spannungsversorgung für die wenigstens eine elektrische Maschine ein Starten der Verbrennungskraftmaschine nicht möglich ist.

Aus der US-A-5,698,905 ist ein Kraftfahrzeug mit einer Mehrzahl von Rädern bekannt, dessen Hybridantrieb eine Verbrennungskraftmaschine, einen elektrischen Generator in Antriebsverbindung mit der Verbrennungskraftmaschine und elektrische Radantriebsmotoren zum Antrieb der Räder aufweist, wobei sowohl der Generator als auch die Radantriebsmotoren sowohl als Generatoren und als Motoren betrieben werden können. Die Verbrennungskraftmaschine des bekannten Kraftfahrzeugs lässt sich auch bei einem Ausfall ihrer Starterbatterie starten, indem man das Fahrzeug anschiebt oder anschleppt oder es einen Berg hinabrollen lässt, um ihm kinetische Energie zu verleihen, und indem man dann die Radantriebsmotoren in Generatorbetrieb und den Generator in Motorbetrieb schaltet, sobald die Geschwindigkeit des Fahrzeugs einen vorbestimmten Schwellenwert übersteigt. Der im Motorbetrieb als Starter wirkende Generator dreht dann die Verbrennungskraftmaschine an. Das bekannte Verfahren eignet sich jedoch zum einen nur zum Einsatz bei Kraftfahrzeugen mit Radantriebsmotoren, einer bei Personenkraftwagen mit Verbrennungskraftmaschine eher unüblichen Konstruktion. Zum anderen muss die auf das Kraftfahrzeug aufgebrachte kinetische Energie in den im Generatorbetrieb arbeitenden Radantriebsmotoren zuerst verlustbehaftet in elektrische Energie und diese dann in dem im Motorbetrieb arbeitenden Generator wieder verlustbehaftet in kinetische Energie zum Andrehen der Verbrennungskraftmaschine umgewandelt werden, so dass zum Starten der Verbrennungskraftmaschine ein verhältnismäßig hoher Geschwindigkeitsschwellenwert erforderlich ist.

Ausgehend hiervon liegt der Erfindung die Aufgabe zugrunde, ein Verfahren zum Starten einer Verbrennungskraftmaschine eines Hybridantriebs eines Kraftfahrzeugs bereit zu stellen, das eine Verringerung der zum Starten der Verbrennungskraftmaschine benötigten kinetischen Energie erlaubt und sich für Personenkraftwagen mit dem eingangs genannten Hybridantrieb eignet, bei dem die Räder wahlweise von der Verbrennungskraftmaschine oder mindestens einer elektrischen Maschine angetrieben werden können.

### Vorteile der Erfindung

Das erfindungsgemäße Verfahren mit den im Anspruch 1 -genannten Merkmalen bietet den Vorteil, dass auch bei ausgefallener Versorgungsspannung für die wenigstens eine elektrische Maschine des Hybridantriebes ein Anlassen (Starten) der Verbrennungskraftmaschine möglich ist. Dadurch, dass die wenigstens eine elektrische Maschine mittels der Getriebeanordnung des Hybridantriebes in einen Generatorbetrieb geschaltet wird und die Abtriebswelle der Getriebeanordnung in Rotation versetzt wird, wird vorteilhaft möglich, durch Aufbringen einer externen kinetischen Energie auf das Kraftfahrzeug auch bei Hybridantrieben einen Hilfsstart des Hybridantriebes durchzuführen. Die externe kinetische Energie auf das Kraftfahrzeug kann beispielsweise durch Anschieben, Anschleppen oder Abrollen auf einer schiefen Ebene oder dergleichen aufgebracht werden. Durch das Schalten der wenigstens einen elektrischen Maschine in den Generatorbetrieb besteht eine Wirkverbindung zwischen der Abtriebswelle der Getriebeanordnung und der Kurbelwelle der Verbrennungskraftmaschine. Somit ist eine Übertragung der kinetischen Energie von der Abtriebswelle auf die Kurbelwelle der Verbrennungskraftmaschine zu deren Andrehen möglich.

In bevorzugter Ausgestaltung der Erfindung ist vorgesehen, dass bei einem Hybridantrieb mit zwei elektrischen Maschinen eine der elektrischen Maschinen in den Generatorbetrieb geschaltet wird und die durch diese in dem Generatorbetrieb betriebene elektrische Maschine gelieferte elektrische Energie zum Betreiben der wenigstens einen weiteren elektrischen Maschine im Motorbetrieb genutzt wird. Hierdurch kann das Starten der Verbrennungskraftmaschine durch Aufbringen einer externen kinetischen Energie auf das Kraftfahrzeug durch die sich im Motorbetrieb befindende elektrische Maschine unterstützt werden, nachdem die sich im Generatorbetrieb befindende elektrische Maschine genügend elektrische Energie bereitstellt.

In weiterer bevorzugter Ausgestaltung der Erfindung ist vorgesehen, dass die wenigstens eine elektrische Maschine, insbesondere alle elektrischen Maschinen der Hybridanordnung, zunächst im Leerlauf betrieben wird und erst nach Aufbringen einer vorgebbar großen, externen kinetischen Energie auf das Kraftfahrzeug die elektrischen Maschinen in den Generatorbetrieb oder Motorbetrieb geschaltet werden. Hierzu kann beispielsweise eine Drehzahl der Abtriebswelle als Kriterium herangezogen werden. Hierdurch wird das Aufbringen einer genügend großen kinetischen Energie auf das Kraftfahrzeug vereinfacht, da zunächst ein Wirkwiderstand der elektrischen Maschinen nicht zu überwinden ist.

Ferner ist in bevorzugter Ausgestaltung der Erfindung vorgesehen, dass zum Starten des Hybridantriebes die elektrische Maschine zunächst im Leerlauf betrieben wird und nach Aufbringen einer vorgebbar großen, externen kinetischen Energie auf das Kraftfahrzeug die elektrische Maschine mechanisch, pneumatisch, hydraulisch oder auf andere geeignete Art gebremst wird. Hierdurch wird erreicht, dass die Abtriebswelle der Getriebeanordnung mit der Kurbelwelle der Verbrennungskraftmaschine direkt mechanisch gekoppelt wird, so dass ein Andrehen der Verbrennungskraftmaschine möglich wird.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine schematische Ansicht eines Hybridantriebes eines Kraftfahrzeuges und
- Figur 2: in einem Blockschaltbild verschiedene Startvarianten der Verbrennungskraftmaschine des Hybridantriebes.

### Beschreibung der Ausführungsbeispiele

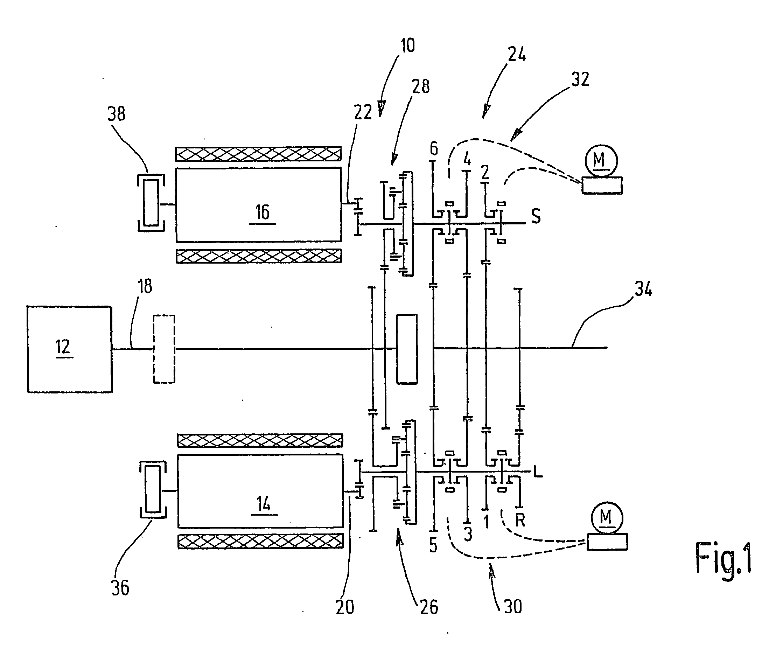

Figur 1 zeigt schematisch einen insgesamt mit 10 bezeichneten Hybridantrieb eines Kraftfahrzeuges. Der Hybridantrieb 10 umfasst eine Verbrennungskraftmaschine 12 sowie eine erste elektrische Maschine 14 und eine zweite elektrische Maschine 16. Eine Kurbelwelle 18 der Verbrennungskraftmaschine 12 und Antriebswellen 20 beziehungsweise 22 der elektrischen Maschinen 14 und 16 sind mit einer Getriebeanordnung 24 wirkverbunden. Hierbei ist die Antriebswelle 20 mit einem ersten Planetengetriebe 26 und die Antriebswelle 22 mit einem zweiten Planetengetriebe 28 verbunden. Ein Hohlrad des Planetengetriebes 26 ist mit einem Schaltgetriebe 30 und ein Hohlrad des Planetengetriebes 28 mit einem Schaltgetriebe 32 verbunden. Die Schaltgetriebe 30 und 32 wiederum sind mit einer Abtriebswelle 34 der Getriebeanordnung 24 wirkverbunden. Die Abtriebswelle 34 ist mit einer Antriebsachse des nicht dargestellten Kraftfahrzeuges wirkverbunden.

Aufbau und Wirkungsweise eines derartigen Hybridantriebes 10 sind allgemein bekannt, so dass im Rahmen der vorliegenden Beschreibung hierauf nicht näher eingegangen wird. Insbesondere kann durch gezielte Ansteuerung der Verbrennungskraftmaschine 12 und/oder der elektrischen Maschinen 14 und 16 von diesen ein unterschiedlicher Antriebsmoment auf die Abtriebswelle 34 abgefordert werden. Somit lassen sich verschiedene Betriebsmodi des Hybridantriebes 10 einstellen. Die Schaltgetriebe 30 und 32 gestatten durch Betätigung eines Schaltgebers in bekannter Weise das Einlegen unterschiedlicher Gänge, die hier mit den Gängen 1, 2, 3, 4, 5 und 6 sowie einem Rückwärtsgang R bezeichnet sind. Die elektrischen Maschinen 14 und 16 können jeweils im Generatorbetrieb betrieben werden und dienen beispielsweise der Bereitstellung einer Bordnetzspannung des Kraftfahrzeuges und dem Aufladen eines Akkumulators. Den elektrischen Maschinen 14 und 16 sind jeweils Bremseinrichtungen 36 und 38 zugeordnet, mit denen Rotoren der elektrischen Maschinen 14 und 16 mechanisch gebremst werden können.

Im Normalbetrieb wird die Verbrennungskraftmaschine 12 des Hybridantriebes 10 durch motorischen Betrieb wenigstens einer der elektrischen Maschinen 14 und 16 in bekannter Weise angedreht (gestartet). Hierzu wird die elektrische Maschine 14 und/oder 16 mit einer Bordnetzversorgung, in der Regel einer Kraftfahrzeugbatterie, verbunden.

Bei den nachfolgenden Erläuterungen wird davon ausgegangen, dass ein Starten der Verbrennungskraftmaschine 12 durch den an sich normalen Betrieb nicht möglich ist. Dies ist beispielsweise gegeben, wenn die für die E-Maschinen zuständige Kraftfahrzeugbatterie entladen oder defekt ist. Somit würde keine elektrische Energie im Kraftfahrzeug zum Starten der Verbrennungskraftmaschine 12 zur Verfügung stehen.

Nachfolgend werden drei Ausführungsvarianten erläutert, gemäß denen ein Andrehen (Starten) der Verbrennungskraftmaschine 12 ohne zur Verfügung stehender elektrischer Energiequelle möglich ist. Allen drei Ausführungsvarianten ist gemeinsam, dass zum Andrehen der Verbrennungskraftmaschine 12 die Abtriebswelle 34 des Hybridantriebes 10 in Rotation versetzt wird. Dies kann beispielsweise durch Anschieben oder Anschleppen des Kraftfahrzeuges erfolgen. Durch Wirkverbindung der Abtriebswelle 34 mit einer Antriebsanordnung (Antriebsräder) des Kraftfahrzeuges wird bei Aufbringen einer kinetischen Energie auf das Kraftfahrzeug die Bewegung des Kraftfahrzeuges in eine Rotation der Abtriebswelle 34 umgesetzt. Ferner ist möglich, das Kraftfahrzeug auf einer schiefen Ebene, beispielsweise einer abfallenden Straße oder dergleichen, abrollen zu lassen.

Die erste Variante sieht vor, dass die elektrischen Maschinen 14 und 16 zunächst im Leerlauf geschaltet sind, das heißt, diese befinden sich nicht in ihrem motorischen Betrieb oder generatorischen Betrieb. Die Schaltgetriebe 30 und 32 werden in definierte Schaltstellungen versetzt. Dies kann beispielsweise derart erfolgen, dass das Schaltgetriebe 30 in den Rückwärtsgang R geschaltet wird und das Schaltgetriebe 32 in den zweiten Gang 2. Hierzu werden die Vorgelegewellen der Schaltgetriebe 30 und 32 in die entsprechende Schaltstellung bewegt. Nachdem die Abtriebswelle. 34 in Rotation versetzt ist, laufen die elektrischen Maschinen 14 und 16 entsprechend der Kopplung der Antriebswellen 20 und 22 mit der Getriebeanordnung 24 in unterschiedlicher Drehrichtung. Die elektrische Maschine 16 wird in den generatorischen Betrieb gebracht, während die elektrische Maschine 14 in den motorischen Betrieb gebracht ist. Über die Getriebeanordnung 24 findet somit eine mechanische Kopplung der Abtriebswelle 34 mit der Kurbelwelle 18 der Verbrennungskraftmaschine 12 statt, so dass bei Rotation der Abtriebswelle 34 gleichzeitig die Kurbelwelle 18 rotiert und in an sich bekannter Weise dem Andrehen der Verbrennungskraftmaschine 12 dient. Dadurch, dass sich die elektrische Maschine 16 im generatorischen Betrieb befindet, liefert diese eine elektrische Energie in das Bordnetz des Kraftfahrzeuges. Diese elektrische Energie kann von der elektrischen Maschine 14 zusätzlich für einen motorischen Betrieb genutzt werden, so dass das hierdurch anliegende Antriebsmoment der elektrischen Maschine 14 zusätzlich zum Andrehen der Verbrennungskraftmaschine 12 nutzbar ist.

Eine zweite Ausführungsvariante sieht vor, dass zunächst die elektrischen Maschinen 14 und 16 im Leerlauf betrieben werden. Im Schaltgetriebe 30 und 32 werden definierte Gänge eingelegt. Beispielsweise wird mittels der Vorgelegewellen das Schaltgetriebe 30 in den ersten Gang 1 und das Schaltgetriebe 32 in den zweiten Gang 2 gelegt. Nach Aufbringen einer kinetischen Energie auf das Kraftfahrzeug, das heißt, dieses befindet sich in Bewegung und die Abtriebswelle 34 rotiert, werden die elektrischen Maschinen 14 und 16 jeweils in einen generatorischen Betrieb gebracht. Durch'beide elektrischen Maschinen 14 und 16 wird somit ein gleichgerichtetes Drehmoment über die Getriebeanordnung 24 auf die Kurbelwelle 18 übertragen, so dass durch Rotation der Kurbelwelle 18 die Verbrennungskraftmaschine 12 angedreht werden kann. Durch den generatorischen Betrieb der elektrischen Maschinen 14 und 16 kann gleichzeitig die Kraftfahrzeugbatterie mit elektrischer Energie gespeist werden. Hierdurch steht - insbesondere bei nicht möglichem regulären Start durch eine entladene Kraftfahrzeugbatterie - somit gleichzeitig auch wieder elektrische Energie für die Bordnetzversorgung zur Verfügung.

Eine dritte Ausführungsvariante sieht vor, dass bei rotierender Abtriebswelle 34 die elektrischen Maschinen 14 und 16 zunächst im Leerlauf geschaltet sind. Zuvor wurden definierte Gänge eingelegt. Nachdem die Abtriebswelle 34 in Rotation versetzt ist, wird wenigstens eine der elektrischen Maschinen 14 oder 16 durch Betätigung der Bremseinrichtungen 36 oder 38 gebremst. Hierdurch wird die Abtriebswelle 34 direkt über die Getriebeanordnung 24 mit der Kurbelwelle 18 gekoppelt. Diese direkte Kopplung ermöglicht nunmehr ein Andrehen (Starten) der Verbrennungskraftmaschine 12.

Anhand der vorstehenden Erläuterungen wird deutlich, dass für das Andrehen der Verbrennungskraftmaschine 12 unterschiedliche Strategien gefahren werden können, wobei Voraussetzung immer eine Rotation der Abtriebswelle 34 durch Aufbringen einer kinetischen Energie auf das Kraftfahrzeug ist. Welche der möglichen Strategien letztendlich benutzt wird, kann durch ein übergeordnetes Motorsteuergerät des Hybridantriebes 10 entschieden werden.

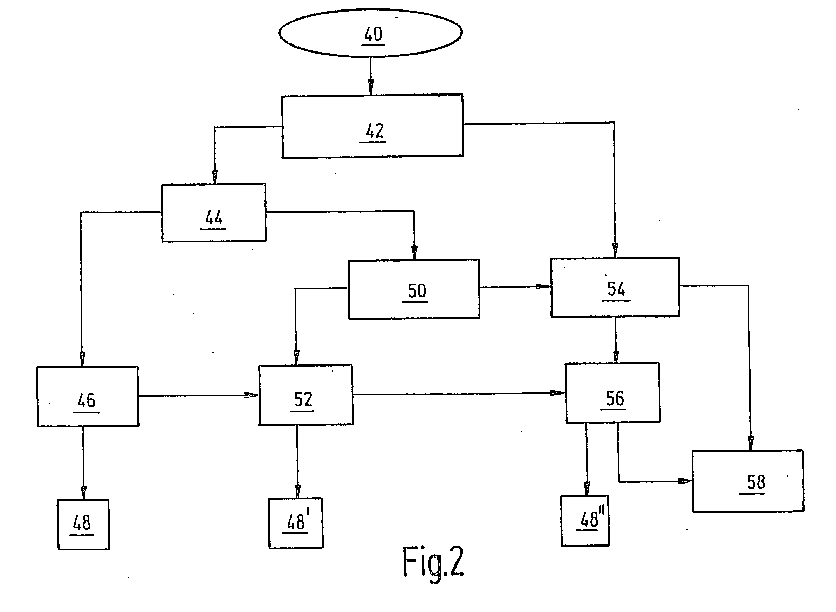

Figur 2 zeigt in einem Blockschaltbild die Möglichkeiten der Abarbeitung der Anlassstrategien der Verbrennungskraftmaschine 12. Zunächst wird nach Auslösen eines Startbefehles 40 in einem Schritt 42 überprüft, ob die elektrischen Maschinen 14 und 16 funktionsfähig sind. Ist die Funktionsfähigkeit der elektrischen Maschinen 14 und 16 gegeben, wird in einem nächsten Schritt 44 geprüft, ob die Ansteuerung der elektrischen Maschinen 14 und 16 in vollem Umfange möglich ist. Ist dies möglich, kann ein Anlassen der Verbrennungskraftmaschine 12 entsprechend der ersten erläuterten Verfahrensvariante 46 erfolgen. Das heißt, die elektrische Maschine 14 ist in den generatorischen Betrieb geschaltet und die elektrische Maschine 16 in den motorischen Betrieb. Danach erfolgt das Anlassen 48 der Verbrennungskraftmaschine 12.

Ergibt die Abfrage 44, dass zwar die elektrischen Maschinen 14 und 16 funktionsfähig sind, aber eine Ansteuerung der elektrischen Maschinen 14 und 16 in vollem Umfang nicht gewährleistet ist, wird in einem Schritt 50 überprüft, ob die elektrischen Maschinen 14 und 16 zwar nicht im motorischen aber jedoch zumindest im generatorischen Betrieb einsetzbar sind. Ist diese Möglichkeit gegeben, erfolgt in einem Schritt 52 das Anlassen 48' der Verbrennungskraftmaschine 12 nach der erläuterten zweiten Ausführungsvariante.

Ergibt die Abfrage 42, dass die elektrischen Maschinen 14 und 16 nicht funktionsfähig sind, und die Abfrage 50, dass auch ein generatorischer Betrieb der elektrischen Maschinen 14 und 16 nicht möglich ist, wird in einem Schritt 54 geprüft, ob die Bremseinrichtungen 36 und 38 der elektrischen Maschinen 14 und 16 funktionsfähig sind. Ist dies gegeben, wird in einem Schritt 56 die dritte Variante 48'' zum Starten der Verbrennungskraftmaschine 12 ausgelöst. Ergibt die Abfrage.54, dass die Bremseinrichtungen 36 und 38 nicht funktionsfähig sind, erfolgt die Entscheidung 58, dass ein Starten der Verbrennungskraftmaschine 12 durch Anschieben, Abschleppen oder Abrollen auf einer schiefen Ebene nicht möglich ist.

Die Startvarianten 46, 52 und 56 zum Anlassen der Verbrennungskraftmaschine 12 bauen zusätzlich redundant aufeinander auf. Ergeben die vorhergehenden Abfragen 42 und 44, dass die Variante 46 zum Starten der Verbrennungskraftmaschine 12 an sich möglich ist, erfolgt jedoch kein Starten der Verbrennungskraftmaschine 12, kann selbsttätig auf die Variante 52 und von dieser gegebenenfalls selbstständig auf die Variante 56 entschieden werden. Ist auch mit der Variante 56 ein Starten der Verbrennungskraftmaschine 12 nicht erfolgreich, wird die Entscheidung 58 getroffen, dass ein Anlassen der Verbrennungskraftmaschine 12 nicht möglich ist.

Alles in allem wird deutlich, dass durch die verzweigte Entscheidungshierarchie in einfacher Weise Verbrennungskraftmaschinen 12 von Hybridantrieben 10, beispielsweise bei Ausfall der Bordnetzspannungsversorgung, notgestartet werden können, indem auf das Kraftfahrzeug eine kinetische Energie eingeleitet wird.

Die Erfindung beschränkt sich selbstverständlich nicht allein auf-das dargestellte Ausführungsbeispiel eines Hybridantriebes 10. Auch sind andere Anordnungen von Hybridantrieben 10 beispielsweise mit mehr oder weniger als zwei elektrischen Maschinen oder in anderer getriebetechnischer Zusammenschaltung der Verbrennungskraftmaschine 12 und der elektrischen Maschinen 14 und 16 möglich.

## Patentansprüche

1. Verfahren zum Starten einer Verbrennungskraftmaschine eines Hybridantriebs eines Kraftfahrzeugs, bei dem eine externe kinetische Energie auf das Kraftfahrzeug aufgebracht und wenigstens eine elektrische Maschine des Hybridantriebs mittels einer Steuerung in einen Generatorbetrieb geschaltet wird, **dadurch gekennzeichnet, dass** eine Kurbelwelle (18) der Verbrennungskraftmaschine (12) und wenigstens eine elektrische Maschine (14, 16) über eine Getriebeanordnung (24) mit einer Abtriebswelle (34) des Hybridantriebs (10) und über diese mit einer Antriebsachse des Kraftfahrzeugs wirkverbunden werden, und dass zum Andrehen der Kurbelwelle (18) kinetische Energie von der über die Antriebsachse in Rotation versetzten Abtriebswelle (34) auf die Kurbelwelle (18) übertragen wird, nachdem wenigstens eine der elektrischen Maschinen (14, 16) durch eine definierte Schaltstellung der Getriebeanordnung (24) und mittels der Steuerung in den Generatorbetrieb geschaltet worden ist.

2. Verfahren nach Anspruch 1, **dadurch gekennzeichnet, dass** durch die in den Generatorbetrieb geschaltete elektrische Maschine (16) gelieferte elektrische Energie zum Betreiben wenigstens einer zweiten elektrischen Maschine (14) im Motorbetrieb genutzt wird.

3. Verfahren nach einem der vorhergehenden Ansprüche, **dadurch gekennzeichnet, dass** die wenigstens eine elektrische Maschine (14, 16), insbesondere alle elektrischen Maschinen (14, 16) des Hybridantriebs (10), zunächst im Leerlauf betrieben wird und erst nach Aufbringen einer vorgebbar großen, externen kinetischen Energie auf das Kraftfahrzeug die elektrischen Maschinen (14, 16) in den Generatorbetrieb oder Motorbetrieb geschaltet werden.

4. Verfahren nach einem der vorhergehenden Ansprüche, **dadurch gekennzeichnet, dass** der Generatorbetrieb beziehungsweise der Motorbetrieb der elektrischen Maschinen (14, 16) durch Betätigung eines Schaltgetriebes (30, 32) der Getriebeanordnung (24) ausgewählt wird.

5. Verfahren nach einem der vorhergehenden Ansprüche, **dadurch gekennzeichnet, dass** die wenigstens eine elektrische Maschine (14, 16) zunächst im Leerlauf betrieben und dabei die Abtriebswelle (34) in Rotation versetzt wird, und dass anschließend die wenigstens eine elektrische Maschine (14, 16) mechanisch, pneumatisch, hydraulisch oder auf andere geeignete Art gebremst und über die Getriebeanordnung (24) direkt mit der Kurbelwelle (18) gekoppelt wird.

6. Verfahren nach einem der vorhergehenden Ansprüche, **dadurch gekennzeichnet, dass** die Rotation der Abtriebswelle (34) durch Aufbringen einer kinetischen Energie auf das Kraftfahrzeug erzeugt wird.

7. Verfahren nach einem der vorhergehenden Ansprüche, **dadurch gekennzeichnet, dass** eine Auswahl aus den zur Verfügung stehenden Verfahrensvarianten zum Starten der Verbrennungskraftmaschine (12) durch ein Steuergerät des Hybridantriebes (10) erfolgt.

## Claims

1. Method for starting an internal combustion engine of a hybrid drive of a motor vehicle, in which an external kinetic energy is applied to the motor vehicle, and at least one electrical machine of the hybrid drive is switched to a generator mode by means of a controller, **characterized in that** a crankshaft (18) of the internal combustion engine (12) and at least one electrical machine (14, 16) are operatively connected to an output shaft (34) of the hybrid drive (10) via a transmission arrangement (24) and to a driving axle of the motor vehicle via said output shaft, and **in that**, in order to start the rotation of the crankshaft (18), kinetic energy is transmitted from the output shaft (34), which has been set in rotation via the driving axle, to the crankshaft (18) once at least one of the electrical machines (14, 16) has been switched to the generator mode by a defined switching position of the transmission arrangement (24) and by means of the controller.

2. Method according to Claim 1, **characterized in that** electrical energy produced by the electrical machine (16) which has been switched into the generator mode is used for operating at least one second electrical machine (14) in the motor mode.

3. Method according to one of the preceding claims, **characterized in that** the at least one electrical machine (14, 16), in particular all of the electrical machines (14, 16) of the hybrid drive (10), is at first operated on no load, and the electrical machines (14, 16) are switched into the generator mode or motor mode only once a predeterminable amount of external kinetic energy has been applied to the motor vehicle.

4. Method according to one of the preceding claims, **characterized in that** the generator mode or the motor mode of the electrical machines (14, 16) is selected by actuating a shift transmission (30, 32) of the transmission arrangement (24).

5. Method according to one of the preceding claims, **characterized in that** the at least one electrical machine (14, 16) is operated initially on no load and, in the process, the output shaft (34) is set in rotation, and **in that** the at least one electrical machine (14, 16) is then braked mechanically, pneumatically, hydraulically or in another suitable way and coupled directly to the crankshaft (18) via the transmission arrangement (24).

6. Method according to one of the preceding claims, **characterized in that** the rotation of the output shaft (34) is produced by applying a kinetic energy to the motor vehicle.

7. Method according to one of the preceding claims, **characterized in that** a selection from the available method variants for starting the internal combustion engine (12) takes place by means of a control device of the hybrid drive (10).

## Revendications

1. Procédé de démarrage du moteur à combustion interne d'un système hybride de propulsion d'un véhicule automobile, selon lequel une énergie cinétique externe est apportée au véhicule automobile et au moins une machine électrique du système hybride de propulsion est amenée par une commande à fonctionner en générateur,
**caractérisé en ce qu'**
- un système de transmission (24) met un vilebrequin (18) du moteur à combustion interne (12) et au moins une machine électrique (14, 16), en interaction avec l'arbre de sortie (34) du système hybride de propulsion (10) et par cet arbre en interaction avec l'essieu moteur du véhicule, et
- pour entraîner le vilebrequin (18), on lui transmet l'énergie cinétique provenant de l'arbre de sortie (34) entraîné en rotation par l'essieu moteur, après qu'au moins une des machines électriques (14, 16) ait été amenée à fonctionner en générateur par une mise en position de commutation définie du système de transmission (24) et par la commande.

2. Procédé de démarrage selon la revendication 1,
**caractérisé en ce que**
l'énergie électrique délivrée par la machine électrique (16) commutée en générateur est utilisée pour faire fonctionner en moteur au moins une deuxième machine électrique (14).

3. Procédé de démarrage selon la revendication 1 ou 2,
**caractérisé en ce que**
la machine électrique (14, 16) au nombre d'une au moins, et en particulier toutes les machines électriques (14, 16) du système hybride de propulsion (10), tourne(nt) d'abord à vide et c'est seulement après qu'une énergie cinétique externe de grandeur prédéfinissable ait été apportée au véhicule que les machines électriques (14, 16) passent au fonctionnement en générateur ou en moteur.

4. Procédé de démarrage selon une des revendications précédentes,
**caractérisé en ce que**
le fonctionnement en générateur ou en moteur des machines électriques (14, 16) est sélectionné en actionnant un engrenage de commutation (30, 32) du système de transmission (24).

5. Procédé de démarrage selon une des revendications précédentes,
**caractérisé en ce que**
la machine électrique (14, 16) au nombre d'une au moins fonctionne d'abord à vide et l'arbre de sortie (34) est mis en rotation, puis la machine électrique (14, 16) au nombre d'une au moins est freinée mécaniquement, pneumatiquement, hydrauliquement ou d'une autre manière, et est accouplée directement au vilebrequin (18) par le système de transmission (24).

6. Procédé de démarrage selon une des revendications précédentes,
**caractérisé en ce que**
la rotation de l'arbre de sortie (34) est produite par apport d'une énergie cinétique au véhicule.

7. Procédé de démarrage selon une des revendications précédentes,
**caractérisé en ce qu'**
un appareil de commande du système hybride de propulsion (10) opère une sélection parmi les variantes disponibles du procédé de démarrage du moteur à combustion interne (12).
